# EUROPÄISCHE PATENTSCHRIFT

(11) **EP 2 085 282 B1**
(45) Veröffentlichungstag und Bekanntmachung des Hinweises auf die Patenterteilung: **20.11.2013**
(21) Anmeldenummer: 09001063.8
(22) Anmeldetag: 27.01.2009
(51) Int. Cl.: B60W 10/184, B60W 30/18, B60T 7/12, B60T 13/66, B60W 10/18

(54) **Verfahren zur Bremsung eines Fahrzeugs**
Method for braking a vehicle
Procédé de freinage d'un véhicule

(30) Priorität: 29.01.2008 DE 102008006480
(43) Veröffentlichungstag der Anmeldung: 05.08.2009
(73) Patentinhaber: KNORR-BREMSE Systeme für Nutzfahrzeuge GmbH, 80809 München (DE)
(72) Erfinder: Herges, Michael, 80935 München (DE)
(74) Vertreter: Schönmann, Kurt

(56) Entgegenhaltungen:
- EP-A- 0 822 128
- EP-A- 1 359 336
- DE-A1- 10 221 835
- DE-A1-102005 046 893
- US-A- 5 519 996
- US-A1- 2003 225 501
- US-A1- 2007 010 927

## Beschreibung

Die Erfindung betrifft ein Verfahren zur Bremsung eines Fahrzeugs und ein Bremssystem.

Bei Fahrzeugen mit Vollautomatikgetrieben wird im Stillstand oder bei langsamer Fahrt, auch ohne Betätigung des Gaspedals, ein Drehmoment vom Drehmomentwandler erzeugt, das zu einer Kriechbewegung des Fahrzeugs führen kann. Bei einer Bremsung in die Schrittgeschwindigkeit hinein oder bis in den Fahrzeugstillstand bzw. aus dem Fahrzeugstillstand heraus, schiebt das Fahrzeug aufgrund des Wandlermoments ungewünscht. Um stehen zu bleiben, muss der Fahrer die Betriebsbremse betätigen. An den angetriebenen Rädern der Antriebsachse wirkt dann das Wandlermoment dem Bremsmoment entgegen. Bei bestimmten Fahrzeugen, beispielsweise 4x2 Sattelzugmaschinen mit kurzem Radstand und/oder in bestimmten Beladungszuständen (z.B. Solobetrieb), kann die Achslast der Antriebsachse und damit das normalerweise an dieser Achse wirkende Bremsmoment relativ gering sein. Das Wandlermoment ist dann deutlich größer als das Bremsmoment an der Antriebsachse, so dass von den Antriebsrädern eine resultierende Antriebskraft auf die Straße übertragen wird. Soll das Fahrzeug stehen bleiben, müssen die nicht angetriebenen Räder diese Kraft durch eine entgegengesetzt wirkende Bremskraft kompensieren. Ist nun der Reibwert zwischen Rädern und Fahrbahn gering (z.B. auf Eis, im Gelände etc.), so können die Antriebsräder durchdrehen und/oder die nicht angetriebenen Räder blockieren. Zumindest aber wird die Seitenführungskraft der Räder reduziert.

Zur Verbesserung des Fahrverhaltens eines derartigen Fahrzeuges ist es aus der DE 10 2006 003 701 A1 bekannt, die Bremskraft an den Rädern der nicht angetriebenen Achse zu reduzieren und an den Rädern der Antriebsachse entsprechend zu erhöhen, wenn die Antriebseinheit bei Stillstand oder langsamer Fahrt des Fahrzeugs die Antriebsachse antreibt, wobei bis zu einem Bremseingriffpunkt einer Bremsbetätigungseinrichtung (Bremspedal) keine Bremswirkung erzeugt wird. Anschließend wird an den Antriebsrädern ein zusätzlicher Bremsdruck eingesteuert, der ein Bremsmoment erzeugt, das dem Wandlermoment des Drehmomentwandlers entgegen wirkt. Dadurch wird ein Schieben des Fahrzeugs über die Vorderachse und ein Durchdrehen der Antriebsachse verhindert. Eine vor dem Bremseingriff durch die Betriebsbremse ausgeübte Haltekraft für das Fahrzeug bleibt erhalten. Nachteilig bei dieser Lösung ist, dass ein freies Rollen des Fahrzeugs im Fahrbetrieb nicht möglich ist, da der Fahrer nicht zwischen einem ab dem Bremseingriffspunkt der Bremsbetätigungseinrichtung eintretendem Bremsmoment zur Verzögerung des Fahrzeugs und einem Kompensationsmoment zur Kompensation des Drehmoments des Drehmomentwandlers unterscheiden kann. Ferner sind aufwendige Anpassungen der Bremssoftware erforderlich, da derartige Bremssysteme den auftretenden Schlupf aus dem Bremsmomentanteil und dem Kompensationsmomentanteil ermitteln müssen.

Aus der US 2007/0010927 A1 ist weiter ein System bekannt, welches für das Abbremsen eines Fahrzeuges geeignet ist. Jedoch hat dieses System den Nachteil, dass es sich nur zum Bremsen eignet. Die Möglichkeit einer reinen Kompensation des Wandlermoments des Drehmomentwandlers ist mit einem solchen System nicht erreichbar. Weiter ist auch keine Rückmeldung an den Fahrer durch einen spürbaren Druckpunkt vorhanden, welcher den Übergang des Bremsens zwischen Kompensation und Abbremsen identifiziert.

Aus der EP 1 359 336 A1 ist ein Kraftfahrzeug mit Kriechfunktion bekannt. Dieses soll aus dem Fahrzeugstillstand heraus unterscheiden ob ein Anfahren oder ein Kriechen des Fahrzeuges gewünscht wird. Eine Kompensation des Wandlermoments im Bezug auf den Bremsvorgang des Kraftfahrzeuges, insbesondere mit einer Rückmeldung an den Fahrer durch einen spürbaren Druckpunkt ist mit einem solchen Fahrzeug nicht möglich.

Die DE 10 2005 046 893 A1 zeigt ein Verfahren zur Steuerung eines Getriebes. Auch hier sind die Möglichkeiten des Einsatzes auf das Vorsehen und Steuern eines Kriechens des Fahrzeuges fokussiert. Ein Rückmeldung mittels eines spürbaren Druckpunktes und eine Kompensation des Wandlermoments während eines komplexen Bremsvorganges sind mit einem solchen Verfahren nicht möglich.

Die Aufgabe der Erfindung ist, ein Verfahren zum Bremsen eines Fahrzeugs mittels einer Betriebsbremse und ein Bremssystem bereitzustellen, mit dem jeweils für den Fahrer die Fahrzeugkontrolle beim Bremsen des Fahrzeugs verbessert wird.

Diese Aufgabe wird durch ein Verfahren mit den Merkmalen des Patentanspruchs 1, und durch ein Bremssystem mit den merkmalen des Patentanspruchs 11 gelöst.

Bei dem erfindungsgemäßen Verfahren bzw. Bremssystem zum Bremsen eines Fahrzeugs, mit zumindest einer Betriebsbremse, die mittels mindestens einer Bremsbetätigungseinrichtung (Bremspedal) betätigbar ist, und zumindest einer von einer Antriebseinheit eines Antriebsstrangs angetriebenen Achse, wobei dem Antriebsstrang ein (hydraulischer) Drehmomentwandler zugeordnet ist, wird vor einer Zwischenstellung oder einem Bremseingriffspunkt (Druckpunkt) der Bremsbetätigungseinrichtung mittels der Betriebsbremse ein dem Wandlermoment des Drehmomentwandlers entgegenwirkendes Kompensationsmoment an der Antriebsachse, d.h. an den Antriebsrädern aufgebracht. Das Kompensationsmoment wird als Abbremsungsmoment an den Antriebsrädern derart erzeugt, das es dem Wandlermoment entgegenwirkt, so dass aus dem Wandlermoment keine oder nur eine sehr geringe resultierende Kraft zwischen den Reifen und der Fahrbahn resultiert, aber noch keine Verzögerung. Das Fahrzeug kann, zumindest virtuell, frei rollen. Die Rückstellkraft der Bremsbetätigungseinrichtung (Pedalkraft) wird ab dem Bremseingriffspunkt sprunghaft und für den Fahrer spürbar erhöht. Der Fahrer kann klar unterscheiden zwischen lediglich dem Kompensationsmoment zur Kompensation des Wandlermoments und dem Bremsmoment zum Verzögern des Fahrzeugs. Es muss keine reale Verzögerung angefordert werden, um das Kompensationsmoment zu erhalten.

Das Kompensationsmoment wird vorzugsweise im Leerweg der Bremsbetätigungseinrichtung ab einem Kompensationsstartpunkt aufgebracht. Das heißt, in einem Bereich des Pedalhubs, in dem der Fahrer noch keine Verzögerung oder Abbremsung erwartet, wird ein Bremsmoment an den Antriebsrädern erzeugt, das dem Wandlermoment entgegenwirkt, sodass keine oder nur eine sehr geringe resultierende Kraft zwischen Reifen und Fahrbahn entsteht.

Gemäß einem bevorzugten Ausführungsbeispiel der Erfindung, wird das Antriebsmoment nach dem Kompensationsstartpunkt mittels des Kompensationsmoments vollständig kompensiert (Kriechmomentkompensation). Bei dieser Variante der Erfindung wird das Kompensationsmoment ab einer bestimmten Pedalstellung vor dem Bremseingriffspunkt des Bremspedals vollständig aufgebracht. Das Fahrzeug wird dadurch weder verzögert, noch angetrieben. Es entsteht ein virtueller Leerlauf, da sich das Fahrzeug so verhält, als sei kein Gang eingelegt (als sei das Getriebe in Stellung "N"). Dem Fahrer wird der Eindruck vermittelt, dass bei leichter Berührung des Pedals, also noch vor dem Druckpunkt, automatisch auf "N" geschaltet wird. Ein ungewünschtes Schieben des Fahrzeugs aufgrund des Wandlermoments wird verhindert. Vorteilhaft ist weiterhin, dass schlupfbasierte Regelungen lediglich den Schlupf des Bremsdrucks erfassen, da Wandlermoment und Kompensationsmoment sich gegenseitig aufheben und zu keiner Kraft zwischen Rad und Straße führen und somit auch zu keinem Schlupf. Das Kompensationsmoment kann gemäß einer Sprungfunktion aufgebracht werden.

Bei einem Ausführungsbeispiel wird das Kompensationsmoment zwischen dem Kompensationsstartpunkt und dem Bremseingriffspunkt stufenweise und/oder stufenlos aufgebracht. Das Kompensationsmoment kann gemäß einer Rampenfunktion aufgebracht werden. Das Kompensationsmoment wird hierbei zwischen zwei Stellungen der Bremsbetätigungseinrichtung, die noch vor dem Bremseingriffspunkt liegen, beispielsweise stufbar aufgebaut. Diese Variante hat den Vorteil, dass das Fahrzeug stufbar oder stufenlos kriechen kann, bis das Kompensationsmoment das Wandlermoment erreicht. Vorzugsweise wird das Antriebsmoment vor dem Bremseingriffspunkt mittels des Kompensationsmoments vollständig kompensiert, so dass der virtuelle Leerlauf erreicht wird.

Ferner kann das Kompensationsmoment zwischen dem Kompensationsstartpunkt und einem Punkt nach dem Bremseingriffspunkt stufenweise und/oder stufenlos aufgebracht werden. Bei dieser Variante der Erfindung wird das Kompensationsmoment zwischen zwei Pedalstellungen, von denen eine vor Beginn des eigentlichen Bremsbereichs liegt und die zweite danach, beispielsweise stufbar aufgebaut. Diese Variante hat ebenfalls den Vorteil, dass das Fahrzeug stufbar oder stufenlos kriechen kann, wobei der stufbare Bereich größer als der Bereich zwischen dem Kompensationsstartpunkt und dem Bremseingriffspunkt ist. Eine vollständige Kompensation des Wandlermoments wird bei dieser Variante erst erreicht, wenn die Bremsung bereits begonnen hat.

Das Kompensationsmoment kann nach Erreichen des Wandlermoments mit zunehmender Betätigung der Bremsbetätigungseinrichtung etwa konstant gehalten werden. Der Kompensationsdruckanteil bleibt über die gesamte Abbremsung konstant, bis der maximale Druck erreicht ist.

Bei einem alternativen Ausführungsbeispiel wird das Kompensationsmoment nach dem Bremseingriffspunkt mit zunehmender Betätigung der Bremsbetätigungseinrichtung stufenweise und/oder stufenlos reduziert. Der Kompensationsdruck wird mit zunehmender Abbremsung abgebaut.

Als besonders vorteilhaft hat es sich erwiesen, wenn das vollständige Kompensationsmoment nur im oder nahe dem Stillstand des Fahrzeugs, beispielsweise in einem Geschwindigkeitsbereich von etwa 0 bis 3 km/h, ausgesteuert wird. Eine volle Kompensation wird dabei nur im Stillstand oder knapp darüber ausgeführt. Über einer definierten Grenzgeschwindigkeit wird kein Kompensationsdruck mehr eingesteuert. Die Grenzgeschwindigkeit liegt vorzugsweise im Bereich von etwa 2 bis 10 km/h. Die Radgeschwindigkeit kann beispielsweise aus dem C3-Signal der ECU oder mittels den Raddrehzahlsensoren des ABS-Systems (ABS-Drehzahlfühler) ermittelt werden.

Das Kompensationsmoment wird vorzugsweise mit zunehmender Fahrzeuggeschwindigkeit reduziert, so dass bei höheren Geschwindigkeiten ein geringerer oder kein Kompensationsdruck eingesteuert wird. Dadurch kann die Temperatur der Bremsen reduziert und der Bremsenverschleiß wesentlich minimiert werden. Dies ist auch physikalisch sinnvoll, da das Wandlermoment abnimmt, wenn die Fahrzeuggeschwindigkeit sich der Motordrehzahl annähert.

Erfindungsgemäß wird es besonders bevorzugt, wenn das Bremsmoment nach dem Bremseingriffspunkt zu dem Kompensationsmoment addiert wird. Wird das Kompensationsmoment zu dem zur Verzögerung dienenden Bremsmoment hinzu addiert, messen Bremssysteme, die das zur Verzögerung dienende Bremsmoment schlupfbasiert berechnen, lediglich den Schlupf, der von diesem Bremsmomentanteil her rührt. Dadurch wird eine Verfälschung der Schlupfermittlung durch das Wandlermoment verhindert. Die Schlüpfe verhalten sich so, als sei das Fahrzeug im Leerlauf bzw. ausgekuppelt. Dadurch kann die gleiche Software verwendet werden, wie bei einem Fahrzeug mit Schaltgetriebe. Auch schlupfbasierte Funktionen wie Masseschätzung, Koppelkraftregelung, Tilt-Prevention usw. können dadurch unverändert von Schaltgetriebefahrzeugen übernommen werden.

Das Kompensationsmoment kann, insbesondere bei höheren Geschwindigkeiten, durch eine Retarderintegration (Retardervorschaltung) mittels zumindest einem Retarder (Retardermoment) aufgebracht werden.

Als Drehmomentwandler kann ein hydraulisches Wandlergetriebe oder eine hydraulische Wandlerschaltkupplung (WSK) verwendet werden. Eine Wandlerschaltkupplung ist eine verschleißfreie Kupplung, die anstelle einer Reibungskupplung zwischen Motor und Getriebe vorgesehen ist. Wandlerschaltgetriebe benötigen keine Reibungskupplung mehr, wobei die Wandlerstufe dann im höheren Geschwindigkeitsbereich überbrückt wird und nicht mehr als Wandler wirkt.

Das Kompensationsmoment kann erfindungsgemäß als Kennlinie, Kennfeld und/oder mathematische Formel bereitgestellt werden. Beispielsweise wird die Kennlinie, das Kennfeld und/oder die mathematische Formel am Fertigungsende (End-Of-Line) in dem Bremssystem definiert abgelegt. Das Kompensationsmoment wird beispielsweise von einem Getriebe- und/oder Motorsteuergerät bereitgestellt. Ferner kann das Kompensationsmoment aus den Schlüpfen berechnet sein.

Als besonders vorteilhaft hat es sich erwiesen, wenn das Kompensationsmoment mittels eines Kompensationsdrucks der Betriebsbremse erreicht wird. Der Kompensationsdruck wird vorzugsweise von einem Bremsensteuergerät bereitgestellt. Hierbei wird es bevorzugt, wenn der Kompensationsdruck als fester Wert und/oder Wertebereich in einem nichtflüchtigen Speicher des Bremsensteuergerätes abgelegt wird.

Beispielsweise wird der Kompensationsdruck als Kennlinie von dem Bremsensteuergerät bereitgestellt.

Ferner kann der Kompensationsdruck als mehrdimensionales Kennfeld, beispielsweise Moment über Drehzahl, Fahrzeuggeschwindigkeit, Motortemperatur, Drehzahl von Raddrehzahlsensoren an den Rädern, Sensoren des ABS/EBS (EBS Elektronisches Bremssystem) etc., in dem Speicher des Bremsensteuergerätes abgelegt sein.

Der Kompensationsdruck wird vorzugsweise aus Größen von Motor und Antriebsstrang, die über den Fahrzeugdatenbus empfangen werden nach vorgegebenen Algorithmen berechnet.

Erfindungsgemäß kann der Kompensationsdruck dadurch ermittelt werden, dass der Bremsdruck an den angetriebenen Rädern verändert wird, bis sich keine Schlupfdifferenz zu den nicht angetriebenen Rädern einstellt. Hierbei wird ein ausgesteuerter Bremsdruck solange modifiziert, bis sich keine Schlupfdifferenz zu den nicht angetriebenen Rädern einstellt.

Ursprünglich gespeicherte Kompensationsdruckwerte werden anschließend durch den ermittelten Kompensationsdruck ersetzt. Die gespeicherten Parameter werden entsprechend dem neu gelernten Bremsdruck modifiziert und gespeichert.

Sonstige vorteilhafte Weiterbildungen der Erfindung sind Gegenstand der weiteren Unteransprüche.

Im Folgenden werden bevorzugte Ausführungsbeispiele der Erfindung anhand schematischer Zeichnungen näher erläutert. Es zeigen:
Figur 1 den Momentenverlauf an den angetriebenen Rädern gemäß einem ersten erfindungsgemäßen Ausführungsbeispiel mit nach einer Sprungfunktion konstantem Kompensationsmoment;
Figur 2 den Momentenverlauf an den angetriebenen Rädern gemäß einem erfindungsgemäßen Ausführungsbeispiel mit nach einer Rampenfunktion konstantem Kompensationsmoment;
Figur 3 den Momentenverlauf an den angetriebenen Rädern gemäß einem erfindungsgemäßen Ausführungsbeispiel bei dem das Kompensationsmoment bis zu einem Punkt nach dem Bremseingriffspunkt ansteigt;
Figur 4 den Momentenverlauf an den angetriebenen Rädern gemäß einem erfindungsgemäßen Ausführungsbeispiel bei dem das Kompensationsmoment stetig abnimmt und
Figur 5 den Momentenverlauf in Abhängigkeit der Fahrzeuggeschwindigkeit gemäß einem weiteren erfindungsgemäßen Ausführungsbeispiel.

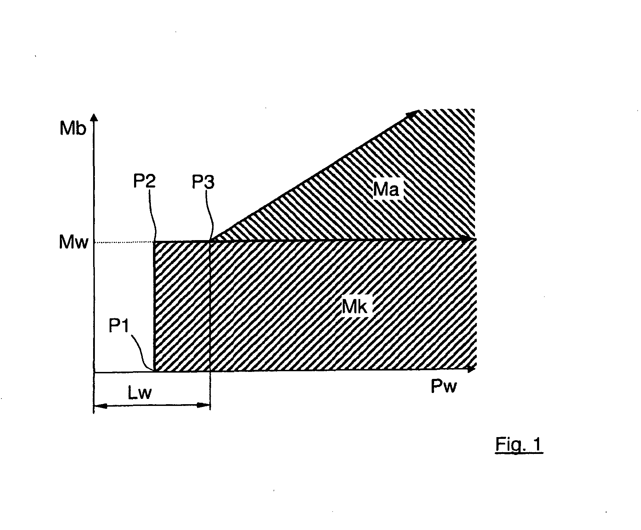

Figur 1 zeigt den Bremsmomentverlauf Mb an den angetriebenen Rädern in Abhängigkeit des Pedalwegs Pw gemäß einem erfindungsgemäßen Verfahren zum Bremsen eines Fahrzeugs, mit zumindest einer Betriebsbremse, die mittels einer Bremsbetätigungseinrichtung (Bremspedal) betätigbar ist, und einer von einer Antriebseinheit eines Antriebsstrangs angetriebenen Achse, wobei dem Antriebsstrang ein hydraulischer Drehmomentwandler zugeordnet ist. Als Drehmomentwandler kann ein hydraulisches Wandlergetriebe oder eine hydraulische Wandlerschaltkupplung (WSK) verwendet werden. Erfindungsgemäß wird vor einem Bremseingriffspunkt P3 (Druckpunkt, Bremseinsprung) der Bremsbetätigungs-einrichtung mittels der Betriebsbremse ein dem Wandlermoment Mw des Drehmomentwandlers entgegenwirkendes Kompensationsmoment Mk an der Antriebsachse, d.h. an den Antriebsrädern aufgebracht. Das Kompensationsmoment Mk wird als Bremsmoment an den Antriebsrädern derart erzeugt, das es dem Wandlermoment Mw entgegenwirkt, so dass aus dem Wandlermoment keine oder nur eine sehr geringe resultierende Kraft zwischen den Reifen und der Fahrbahn resultiert, aber noch keine Verzögerungskraft. Das Fahrzeug kann, zumindest virtuell, frei rollen. Die Rückstellkraft der Bremsbetätigungseinrichtung (Pedalkraft) ist ab dem Bremseingriffspunkt P3 erhöht. Erfindungsgemäß ist an diesem Punkt eine sprunghafte Erhöhung der Pedalkraft für den Fahrer spürbar. Der Fahrer kann klar unterscheiden zwischen lediglich dem Kompensationsmoment Mk im Bereich eines Leerwegs Lw und einem Abbremsungsmoment Ma zum Verzögern des Fahrzeugs. Es muss keine reale Verzögerung angefordert werden, um das Kompensationsmoment Mk zu erhalten. Nach dem Bremseingriffspunkt P3 steigt das Abbremsmoment Ma mit zunehmender Pedalbetätigung linear bis zu einem maximalen Bremsdruck an.

Das Kompensationsmoment Mk wird im Leerweg Lw der Bremsbetätigungseinrichtung, d.h. zwischen der Grundstellung des Bremspedals und dem Bremseingriffspunkt P3, ab einem Kompensationsstartpunkt P1 aufgebracht. Das heißt, in einem Bereich des Pedalhubs, in dem der Fahrer noch keine Verzögerung oder Abbremsung erwartet, wird ein Kompensationsmoment Mk an den Antriebsrädern erzeugt, das dem Wandlermoment Mw entgegenwirkt, sodass keine oder nur eine sehr geringe resultierende Kraft zwischen Reifen und Fahrbahn entsteht.

Bei dem dargestellten Ausführungsbeispiel wird das Antriebsmoment (Wandlermoment) Mw nach einem Punkt P2 mittels des Kompensationsmoments Mk vollständig kompensiert (Kriechmomentkompensation). Das Kompensationsmoment Mk wird gemäß einer Sprungfunktion aufgebracht. Das heißt, bei dieser Variante der Erfindung wird das Kompensationsmoment ab einer bestimmten Pedalstellung vor dem Bremseingriffspunkt P3 des Bremspedals vollständig aufgebracht. Das Fahrzeug wird dadurch weder verzögert, noch angetrieben. Es entsteht ein virtueller Leerlauf, da sich das Fahrzeug so verhält, als sei kein Gang eingelegt (als sei das Getriebe in Stellung "N"). Dem Fahrer wird der Eindruck vermittelt, dass bei leichter Berührung des Pedals, also noch vor dem Druckpunkt P3, automatisch auf "N" geschaltet wird. Ein ungewünschtes Schieben des Fahrzeugs aufgrund des Wandlermoments Mw wird verhindert. Vorteilhaft ist weiterhin, dass schlupfbasierte Regelungen lediglich den Schlupf des Bremsdrucks erfassen, da Wandlermoment Mw und Kompensationsmoment Mk sich gegenseitig aufheben und zu keiner Kraft zwischen Rad und Straße führen und somit auch zu keinem Schlupf. Das Kompensationsmoment Mk kann nach Erreichen des Wandlermoments Mw mit zunehmender Betätigung der Bremsbetätigungseinrichtung etwa konstant gehalten werden. Der Kompensationsdruckanteil bleibt über die gesamte Abbremsung konstant, bis der maximale Bremsdruck erreicht ist. Erfindungsgemäß wird es besonders bevorzugt, wenn das Abbremsmoment Ma nach dem Bremseingriffspunkt P3, wie dargestellt, zu dem Kompensationsmoment addiert wird. Wird das Kompensationsmoment Mk zu dem zur Verzögerung dienenden Abbremsmoment hinzu addiert, messen Bremssysteme, die das zur Verzögerung dienende Bremsmoment Mb schlupfbasiert berechnen, lediglich den Schlupf, der von diesem Bremsmomentanteil her rührt. Dadurch wird eine Verfälschung der Schlupfermittlung durch das Wandlermoment Mw verhindert. Die Schlüpfe verhalten sich so, als sei das Fahrzeug im Leerlauf bzw. ausgekuppelt. Dadurch kann die gleiche Software verwendet werden, wie bei einem Fahrzeug mit Schaltgetriebe. Auch schlupfbasierte Funktionen wie Masseschätzung, Koppelkraftregelung, Tilt-Prevention usw. können dadurch unverändert von Schaltgetriebefahrzeugen übernommen werden.

Das Kompensationsmoment Mk wird durch die Betriebsbremse aufgebracht, kann aber alternativ oder zusätzlich, insbesondere bei höheren Geschwindigkeiten, durch eine Retarderintegration (Retardervorschaltung) mittels einem Retarder (Retardermoment) aufgebracht werden. Das Kompensationsmoment Mk kann erfindungsgemäß als Kennlinie, Kennfeld und/oder mathematische Formel bereitgestellt werden. Beispielsweise wird die Kennlinie, das Kennfeld und/oder die mathematische Formel am Fertigungsende (End-Of-Line) in dem Bremssystem definiert abgelegt. Das Kompensationsmoment Mk wird beispielsweise auch von einem Getriebe- und/oder Motorsteuergerät bereitgestellt. Ferner kann das Kompensationsmoment Mk aus den Schlüpfen berechnet sein. Als besonders vorteilhaft hat es sich erwiesen, wenn das Kompensationsmoment Mk mittels eines Kompensationsdrucks der Betriebsbremse erreicht wird. Der Kompensationsdruck wird vorzugsweise von einem Bremsensteuergerät bereitgestellt. Hierbei wird es bevorzugt, wenn der Kompensationsdruck als fester Wert und/oder Wertebereich in einem nichtflüchtigen Speicher des Bremsensteuergerätes abgelegt wird. Beispielsweise wird der Kompensationsdruck als Kennlinie von dem Bremsensteuergerät bereitgestellt. Ferner kann der Kompensationsdruck als mehrdimensionales Kennfeld, beispielsweise Moment über Drehzahl, Fahrzeuggeschwindigkeit, Motortemperatur, Drehzahl von Raddrehzahlsensoren an den Rädern, Sensoren des ABS/EBS (EBS Elektronisches Bremssystem) etc., in dem Speicher des Bremsensteuergerätes abgelegt sein. Der Kompensationsdruck wird vorzugsweise aus Größen von Motor und Antriebsstrang, die über den Fahrzeugdatenbus empfangen werden nach vorgegebenen Algorithmen berechnet. Erfindungsgemäß kann der Kompensationsdruck auch dadurch ermittelt werden, dass der Bremsdruck an den angetriebenen Rädern verändert wird, bis sich keine Schlupfdifferenz zu den nicht angetriebenen Rädern einstellt. Hierbei wird ein ausgesteuerter Bremsdruck solange modifiziert, bis sich keine Schlupfdifferenz zu den nicht angetriebenen Rädern einstellt. Ursprünglich gespeicherte Kompensationsdruckwerte werden anschließend durch den ermittelten Kompensationsdruck ersetzt. Die gespeicherten Parameter werden entsprechend dem neu gelernten Bremsdruck modifiziert und gespeichert.

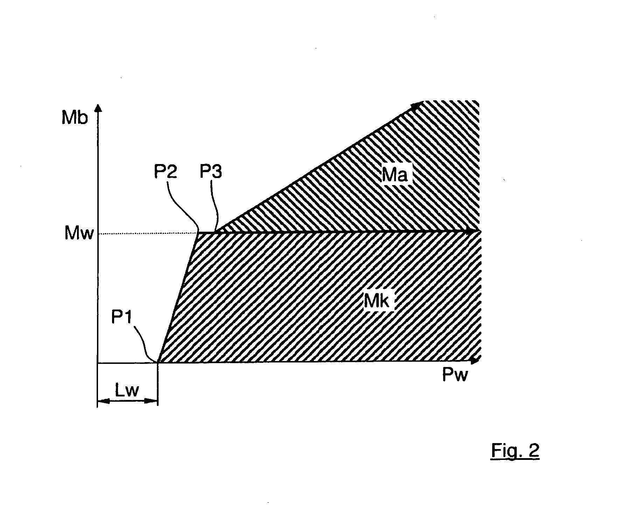

Wie Figur 2 zu entnehmen ist, die ein weiteres Ausführungsbeispiel der Erfindung zeigt, kann das Kompensationsmoment Mk nach einem Leerweg LW zwischen dem Kompensationsstartpunkt P1 und dem Bremseingriffspunkt P3 stufenlos gemäß einer Rampenfunktion über den Punkt P2 aufgebracht werden. Das Kompensationsmoment Mk wird hierbei zwischen zwei Pedalstellungen, die noch vor dem Bremseingriffspunkt P3 liegen, stufbar aufgebaut. Diese Variante hat den Vorteil, dass das Fahrzeug stufbar kriechen kann, bis das Kompensationsmoment Mk das Wandlermoment Mw an dem Punkt P2 erreicht. Das Wandlermoment Mw wird nach dem Punkt P2 noch vor dem Bremseingriffspunkt P3 mittels des Kompensationsmoments Mk vollständig kompensiert, so dass zwischen Punkt P2 und Punkt P3 der virtuelle Leerlauf erreicht wird.

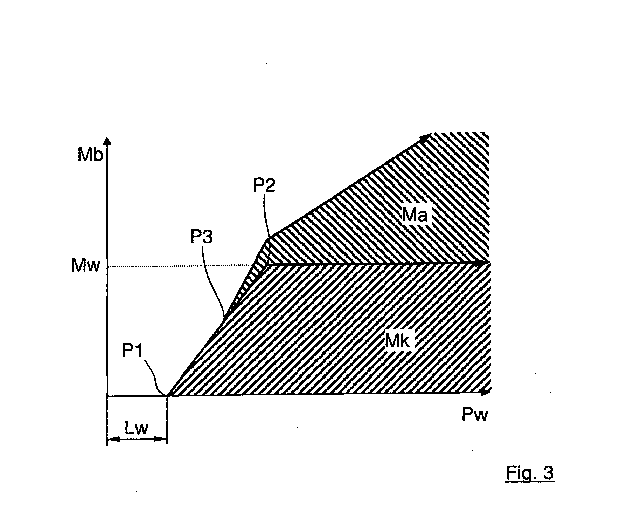

Wie Figur 3 zu entnehmen ist, kann das Kompensationsmoment Mk zwischen dem Kompensationsstartpunkt P1 und einem Punkt P2 nach dem Bremseingriffspunkt P3 stufenlos aufgebracht werden. Bei dieser Variante der Erfindung wird das Kompensationsmoment Mk zwischen zwei Pedalstellungen, von denen eine vor Beginn des eigentlichen Bremsbereichs liegt und die zweite danach, stufbar aufgebaut. Diese Variante hat ebenfalls den Vorteil, dass das Fahrzeug stufbar oder stufenlos kriechen kann, wobei der stufbare Bereich zwischen P1 und P2 größer als der Bereich zwischen dem Kompensationsstartpunkt P1 und dem Bremseingriffspunkt P3 ist. Eine vollständige Kompensation des Wandlermoments Mw wird bei dieser Variante erst erreicht, wenn das Abbremsmoment Ma teilweise anliegt.

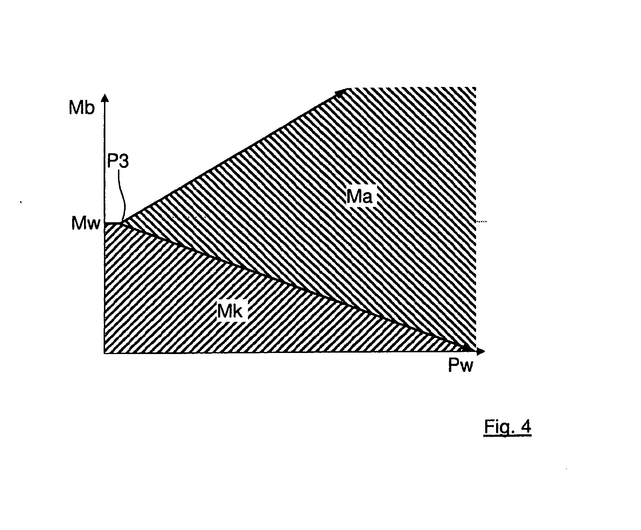

Figur 4 zeigt den Momentenverlauf an den angetriebenen Rädern gemäß einem erfindungsgemäßen Ausführungsbeispiel bei dem das Kompensationsmoment Mk nach dem Bremseingriffspunkt P3 stetig abnimmt. Das Kompensationsmoment Mk wird nach dem Bremseingriffspunkt P3 mit zunehmender Betätigung der Bremsbetätigungseinrichtung (Pedalweg Pw) stufenlos reduziert. Der Kompensationsdruck wird mit zunehmendem Abbremsmoment Ma abgebaut.

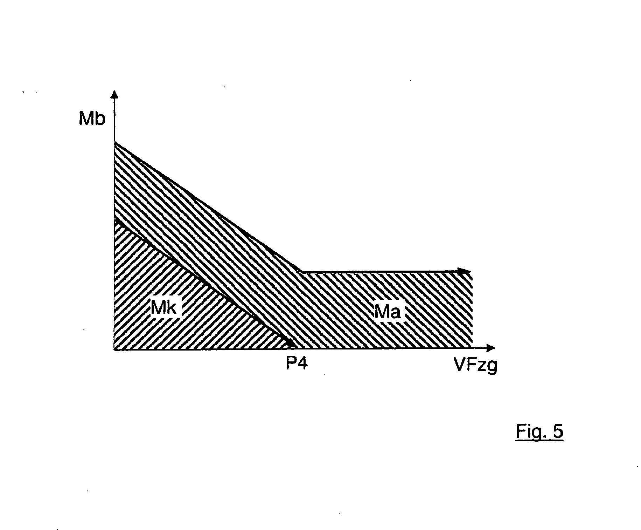

Gemäß Figur 5, die den Momentenverlauf in Abhängigkeit der Fahrzeuggeschwindigkeit VFzg bei konstanter Pedalstellung gemäß einem weiteren erfindungsgemäßen Ausführungsbeispiel zeigt, hat es sich als besonders vorteilhaft erwiesen, wenn das vollständige Kompensationsmoment Mk nur im oder nahe dem Stillstand des Fahrzeugs, beispielsweise in einem Geschwindigkeitsbereich von etwa 0 bis 3 km/h, ausgesteuert wird. Eine volle Kompensation wird dabei nur im Stillstand oder knapp darüber ausgeführt. Über einer definierten Grenzgeschwindigkeit wird am Punkt P4 kein Kompensationsdruck mehr eingesteuert. Dadurch kann die Temperatur der Bremsen reduziert und der Bremsenverschleiß wesentlich minimiert werden. Dies ist auch physikalisch sinnvoll, da das Wandlermoment Mw abnimmt, wenn sich die Fahrzeuggeschwindigkeit VFzg der Motordrehzahl annähert. Die Grenzgeschwindigkeit liegt vorzugsweise im Bereich von etwa 2 bis 10 km/h. Die Radgeschwindigkeit kann beispielsweise aus dem C3-Signal der ECU oder mittels den Raddrehzahlsensoren des ABS-Systems ermittelt werden.

Offenbart ist ein Verfahren zum Bremsen eines Fahrzeugs, mit zumindest einer Betriebsbremse, die mittels mindestens einer Bremsbetätigungseinrichtung betätigbar ist, und zumindest einer von einer Antriebseinheit eines Antriebsstrangs angetriebenen Achse, wobei dem Antriebsstrang ein Drehmomentwandler zugeordnet ist. Erfindungsgemäß wird vor einem Bremseingriffspunkt P3 der Bremsbetätigungseinrichtung mittels der Betriebsbremse ein dem Wandlermoment Mw des Drehmomentwandlers entgegenwirkendes Kompensationsmoment Mk an der Antriebsachse aufgebracht.

### Bezugszeichenliste

- Mb: Bremsmomentverlauf
- Pw: Pedalweg
- P3: Bremseingriffspunkt
- Mw: Wandlermoment
- Mk: Kompensationsmoment
- Lw: Leerweg
- Ma: Abbremsungsmoment
- P1: Kompensationsstartpunkt
- P2: Punkt
- P4: Punkt
- VFzg: Fahrzeuggeschwindigkeit

## Patentansprüche

1. Verfahren zum Bremsen eines Fahrzeugs mittels einer Betriebsbremse, die durch eine von einem Fahrer von einer Ausgangsstellung zu einer Endstellung gegen eine Rückstellkraft bewegbare Bremsbetätigungseinrichtung betätigt wird, wobei das Fahrzeug einen Drehmomentenwandler aufweist, der ein Antriebsmoment auf dasselbe ausüben kann, das Verfahren aufweisend die Schritte:
Bewegung der Bremsbetätigungseinrichtung von der Ausgangsstellung bis zu einer Zwischenstellung (P3) und dabei Aufbringung eines Bremsmoments durch die Betriebsbremse bis zu einem Maße, bei dem das von dem Drehmomentenwandler auf das Fahrzeug ausgeübte Antriebsmoment kompensiert wird,
weitere Bewegung der Bremsbetätigungseinrichtung von der Zwischenstellung (P3) in Richtung zur Endstellung der Betriebsbremse, wobei durch zunehmende Bewegung der Bremsbetätigungseinrichtung von der Zwischenstellung (P3) bis zur Endstellung ein ansteigendes Abbremsungsmoment (Ma) auf das Fahrzeug aufgebracht wird,
wobei bei dem Durchfahren der Zwischenstellung (P3) die Rückstellkraft sprunghaft erhöht wird, so dass der Fahrer aufgrund der Betätigung der
Bremsbetätigungseinrichtung die Stellung derselben wahrnimmt, ab der die Betriebsbremse das Fahrzeug abbremst.

2. Verfahren nach Anspruch 1, wobei die Kompensation des Wandlermoments durch die Betriebsbremse an einem zwischen der Ausgangsstellung und der Zwischenstellung (P3) gelegenen Kompensationsstartpunkt (P1) der Bremsbetätigungseinrichtung erfolgt, so dass ab Erreichen des Kompensationsstartpunkts (P1) ein für den Fahrer virtueller Leerlauf bereit gestellt wird.

3. Verfahren nach Anspruch 1, wobei die Kompensation des Wandlermoments durch die Betriebsbremse an der Ausgangsstellung der Bremsbetätigungseinrichtung erfolgt, so dass ab der Ausgangsstellung ein für den Fahrer virtueller Leerlauf bereit gestellt wird.

4. Verfahren nach einem der vorhergehenden Patentansprüche, wobei das Kompensationsmoment (Mk) gemäß einer Sprungfunktion aufgebracht wird.

5. Verfahren nach einem der vorhergehenden Patentansprüche, wobei das Kompensationsmoment (Mk) zwischen dem Kompensationsstartpunkt (P1) und dem Bremseingriffspunkt (P3) stufenweise und/oder stufenlos aufgebracht wird.

6. Verfahren nach Patentanspruch 4, wobei das Kompensationsmoment (Mk) gemäß einer Rampenfunktion aufgebracht wird.

7. Verfahren nach einem der Patentansprüche 4 oder 5, wobei das Wandlermoment (Mw) vor dem Druckpunkt (P3) mittels des Kompensationsmoments (Mk) vollständig kompensiert wird.

8. Verfahren nach einem der vorhergehenden Patentansprüche, wobei das Kompensationsmoment (Mk) zwischen dem Kompensationsstartpunkt (P1) und einem Punkt (P2) nach dem Druckpunkt (P3) stufenweise und/oder stufenlos aufgebracht wird.

9. Verfahren nach einem der vorhergehenden Patentansprüche, wobei das Kompensationsmoment (Mk) nach Erreichen des Wandlermoments (Mw) mit zunehmender Betätigung der Bremsbetätigungseinrichtung konstant gehalten wird.

10. Verfahren nach einem der Patentansprüche 1 bis 7, wobei das Kompensationsmoment (Mk) nach dem Druckpunkt (P3) mit zunehmender Betätigung der Bremsbetätigungseinrichtung stufenweise und/oder stufenlos reduziert wird.

11. Bremssystem für ein Fahrzeug mit einem Antriebsstrang und einem diesem zugeordneten Drehmomentwandler, wobei das Bremssystem aufweist:
eine Betriebsbremse zum Aufbringen eines Abbremsmoments (Ma) an die Achsen des Fahrzeugs, und
eine zwischen einer Ausgangsstellung und einer Endstellung bewegbaren Bremsbetätigungseinrichtung zum Betätigen der Betriebsbremse, die zwischen einer Ausgangsstellung und einer Endstellung betätigbar ist und die eine RückstellVorrichtung aufweist, die bei der Bewegung der Bremsbetätigungseinrichtung von der Ausgangsstellung zu der Endstellung eine Rückstellkraft erzeugt, wobei das Bremssystem derart ausgeführt ist,
dass bei Bewegung der Bremsbetätigungseinrichtung von der Ausgangsstellung bis zu einer Zwischenstellung (P3) ein Bremsmoment durch die Betriebsbremse bis zu einem Maße erzeugt wird, dass das von dem Drehmomentenwandler auf das Fahrzeug ausgeübte Antriebsmoment kompensiert wird,
dass bei weiterer Bewegung der Bremsbetätigungseinrichtung von der Zwischenstellung (P3) bis zur Endstellung der Betriebsbremse durch die zunehmende Bewegung der Bremsbetätigungseinrichtung von der Zwischenstellung (P3) bis zur Endstellung ein ansteigendes Abbremsungsmoment (Ma) auf das Fahrzeug aufgebracht wird,
wobei bei dem Durchfahren der Zwischenstellung (P3) die Rückstellkraft sprunghaft erhöht wird, so dass der Fahrer aufgrund der Betätigung der Bremsbetätigungseinrichtung die Stellung derselben wahrnimmt, ab der die Betriebsbremse das Fahrzeug abbremst.

## Claims

1. Method of braking a vehicle by means of a service brake, which is operated by a mobile brake operating means under control of a driver, in opposition to a restoring force, from a starting position to a terminal position, wherein the vehicle comprises a torque converter that is adapted to create a driving torque on the vehicle, the method comprising the following steps:
Movement of said brake operating means from said starting position up to an intermediate position (P3), whilst applying a braking torque by said service brake up to a level at which the driving torque created by said torque converter on the vehicle is compensated,
Continued movement of said brake operating means from said intermediate position (P3) along a direction up to the terminal position of said service brake, whilst applying an increasing decelerating torque (Ma) on the vehicle by means of the progressive movement of said brake operating means from the intermediate position (P3) up to la terminal position,
Wherein, during the passage through said intermediate position (P3), the restoring force is increased in jumps in such a manner that the driver will perceive that position of the means, from which onwards the service brake decelerates the vehicle, on account of the operation of the brake operating means.

2. Method according to Claim 1, wherein the compensation of the converter torque by said service brake is realized at a compensation starting point (P1) of said brake control means, which is located between said starting position and said intermediate position, in such a manner that an idling operation that is virtual for the driver is made available from the position at which the operation-starting point is reached.

3. Method according to Claim 1, wherein the compensation of the converter torque by the service brake is realized at the starting position of the brake operating means in such a manner that an idling operation that is virtual for the driver is made available from the position at which the operation-starting point is reached.

4. Method according to any of the preceding Claims, wherein said compensation torque (Mk) is applied in correspondence with a jump function.

5. Method according to any of the preceding Claims, wherein said compensation torque (Mk) is appliqué in incremental form and/or in a continuously variable form entre said compensation-starting point (P1) and the point of intervention of the brake (P3).

6. Method according to Claim 4, wherein said compensation torque (Mk) is applied in correspondence with a ramp function.

7. Method according to any of the Claims 4 or 5, wherein said converter torque (Mw) is completely compensated ahead of the point of intervention (P3) by means of said compensation torque (Mk).

8. Method according to any of the preceding Claims, wherein said compensation torque (Mk) is applied in incremental form and/or in a continuously variable form between said compensation-starting point (P1) and a point (P2) following said point of intervention (P3).

9. Method according to any of the preceding Claims, wherein said compensation torque (Mk) is maintained at a constant level after said converter torque (Mw) has been reached, as said brake operating means is increasingly operated.

10. Method according to any of the Claims 1 to 7, wherein said compensation torque e(Mk) is reduced in an incremental form and/or in a continuously variable form beyond the point of intervention (P3), as brake operating means is increasingly operated

11. Braking system of a vehicle provided with a power train and a torque converter associated therewith, the braking system comprising:
A service brake for application of a decelerating torque (Ma) to the axles of the vehicle, and
A brake operating means mobile between a starting position and a terminal position for the control of said service brake, which is adapted to be moved between a starting position and a terminal position for the operation of said service brake, that is controllable between a starting position and a terminal position and that comprises a restoring means that creates a restoring force when said brake operating means is moved from said starting position up to the terminal position, with said braking system being configured in such a way
that during a movement of said brake operating means from a starting position up to an intermediate position (P3) a braking torque is created by said service brake up to a level such that the driving torque produced by said torque converter on the vehicle is compensated,
that during a continued movement of said brake operating means from said intermediate position (P3) up to the terminal position of said service brake,
the progressive movement of said brake operating means from the intermediate position (P3) up to the terminal position applies an increasing decelerating torque (Ma) on the vehicle,
With said restoring force being increased in incremental form during the passage through said intermediate position (P3) in such a manner that the driver perceives the position of the means, from which onwards the service brake decelerates the vehicle, on account of the operation of the brake operating means.

## Revendications

1. Procédé de freinage d'un véhicule moyennant un frein de service, qui est commandé par un moyen de commande de frein mobile, sous commande d'un chauffeur, à l'encontre d'un effort de rappel à partir d'une position de départ jusqu'à une position de fin de course, dans lequel le véhicule comprend un convertisseur de couple, qui est apte à exercer un couple moteur sur le véhicule, le procédé comprenant les étapes suivantes:
Mouvement dudit moyen de commande de frein à partir de la position de départ jusqu'à une position intermédiaire (P3), en appliquant un couple de freinage par ledit frein de service jusqu'à un degré auquel le couple moteur exercée par ledit convertisseur de couple sur le véhicule est compensé,
Mouvement continu dudit moyen de commande de frein à partir de ladite position intermédiaire (P3) en une direction jusqu'à la position de fin de course dudit frein de service, en appliquant un couple de décélération croissant (Ma) sur le véhicule moyennant le mouvement progressif dudit moyen de commande de frein à partir de la position intermédiaire (P3) jusqu'à la position de fin de course,
dans lequel, au cours du passage par ladite position intermédiaire (P3),
l'effort de rappel est augmenté par à-coups d'une telle façon, que le chauffeur perçoive celle position du moyen, à partir de laquelle le frein de service décélère le véhicule, en vertu de l'actionnement du moyen de commande de frein.

2. Procédé selon la revendication 1, dans lequel la compensation du couple du convertisseur par ledit frein de service se fait à un point de commencement de compensation (P1) dudit moyen de commande de frein, qui est localisé entre ladite position de départ et ladite position intermédiaire, d'une telle façon, qu'une opération au ralenti virtuelle pour le chauffeur soit rendu disponible à partir de la position, à laquelle le point de commencement d'actionnement de frein est atteint.

3. Procédé selon la revendication 1, dans lequel la compensation du couple du convertisseur par le frein de service se fait à la position de départ du moyen de commande de frein, d'une telle façon, qu'une opération au ralenti virtuelle pour le chauffeur soit rendu disponible à partir de la position, à laquelle le point de commencement d'actionnement de frein est atteint.

4. Procédé selon une quelconque des revendications précédentes, dans lequel ledit couple de compensation (Mk) est appliqué selon une fonction à discontinuité.

5. Procédé selon une quelconque des revendications précédentes, dans lequel ledit couple de compensation (Mk) est appliqué par paliers successifs et/ou à action progressive entre ledit point de commencement de compensation (P1) et le point d'intervention du frein (P3).

6. Procédé selon la revendication 4, dans lequel ledit couple de compensation (Mk) est appliqué selon une fonction à rampe.

7. Procédé selon une quelconque des revendications 4 ou 5, dans lequel ledit couple de convertisseur (Mw) est entièrement compensé avant le point d'application (P3) moyennant ledit couple de compensation (Mk).

8. Procédé selon une quelconque des revendications précédentes, dans lequel ledit couple de compensation (Mk) est appliqué par paliers successifs et/ou à action progressive entre ledit point de commencement de compensation (P1) et un point (P2) suivant ledit point d'application (P3).

9. Procédé selon une quelconque des revendications précédentes, dans lequel ledit couple de compensation (Mk) est retenu à un niveau constant après que ledit couple de convertisseur (Mw) est atteint, le plus est continué l'actionnement dudit moyen de commande de frein.

10. Procédé selon une quelconque des revendications 1 à 7, dans lequel ledit couple de compensation e(Mk) est réduit par paliers successifs et/ou à action progressive au-delà du point d'application (P3) le plus grand devient l'actionnement dudit moyen de commande de service.

11. Système de freinage d'un véhicule à une branche d'entraînement et à un convertisseur de couple y affecté, le système de freinage comprenant:
Un frein de service à appliquer un couple de décélération (Ma) aux essieux du véhicule, et
Un moyen de commande de frein mobile entre une position de départ et une position de fin de course pour la commande dudit frein de service, qui est mobile entre une position de départ et une position de fin de course pour l'actionnement dudit frein de service, qui est commandable entre une position de départ et une position de fin de course et qui comprend un moyen de rappel, qui engendre un effort de rappel quand ledit moyen de commande de frein est en mouvement à partir de la position de départ jusqu'à la position de fin de course, audit système de freinage étant configuré en une telle façon, qu'au cours d'un mouvement dudit moyen de commande de frein à partir d'une position de départ jusqu'à une position intermédiaire (P3), un couple de freinage est engendré par ledit frein de service jusqu'à un degré tel que le couple moteur exercé par ledit convertisseur de couple sur le véhicule soit compensé,
qu'au cours d'un mouvement continué dudit moyen de commande de frein à partir de ladite position intermédiaire (P3) jusqu'à la position de fin de course dudit frein de service, le mouvement progressif dudit moyen de commande de frein à partir de la position intermédiaire (P3) jusqu'à la position de fin de course applique un couple de décélération croissant (Ma) sur le véhicule,
audit effort de rappel étant augmenté par paliers successifs au cours du passage par ladite position intermédiaire (P3) d'une telle façon, que le chauffeur perçoive celle position du moyen, à partir de laquelle le frein de service décélère le véhicule, en vertu de l'actionnement du moyen de commande de frein.
